# FASCICULE DE BREVET EUROPEEN

(11) **EP 0 464 766 B1**
(45) Date de publication et mention de la délivrance du brevet: **04.11.1998**
(21) Numéro de dépôt: 91110940.3
(22) Date de dépôt: 02.07.1991
(51) Int. Cl.: G06F 17/60, G07B 17/00, G07F 7/08

(54) **Système de traitement des expéditions de paquets**
Verarbeitungssystem für Paketversand
Parcels shipping processing system

(30) Priorité: 03.07.1990 FR 9008395
(43) Date de publication de la demande: 08.01.1992
(73) Titulaire: NEOPOST INDUSTRIE, F-92220 Bagneux (FR)
(72) Inventeur: Vanpoucke, Jean-François, F-91370 Verrieres le Buisson (FR)
(74) Mandataire: Weinmiller, Jürgen

(56) Documents cités:
- EP-A- 0 207 492
- EP-A- 0 333 043
- WO-A-88/01818

## Description

La présente invention est relative à un système de traitement des expéditions de paquets. Ce système permet de traiter les expéditions de paquets, en provenance de différents expéditeurs qui sont à acheminer vers différents destinataires par différents transporteurs pouvant être publics ou privés.

Dans le brevet européen EP-A-0 333 043, il a été décrit un système de traitement des expéditions de paquets permettant, à partir des données définissant pour chaque expédition un destinataire et un transporteur avec un service de transporteur à utiliser, l'acheminement des expéditions reçues de différents expéditeurs vers leurs destinataires respectifs par différents transporteurs, caractérisé en ce qu'il comporte :
- des premières mémoires qui constituent, d'une part un fichier des transporteurs contenant des caractéristiques propres aux transporteurs utilisables dans le système et relatives à l'identification individuelle des transporteurs eux-mêmes et à l'identification, pour chacun d'eux, de services possibles et de types de documents devant pour chaque service accompagner chaque expédition, et, d'autre part, un fichier des expéditeurs contenant des caractéristiques propres aux utilisateurs utilisant le système et relatives à l'identification individuelle des expéditeurs eux-mêmes et pour chacun d'eux à l'identification de chaque transporteur qu'il peut utiliser avec chaque service de ce transporteur auquel il a droit,
- une deuxième mémoire qui constitue un fichier des expéditions,
- un moyen d'entrée des données relatives à chaque expédition,
- des moyens d'édition des documents,
- un ensemble programmé de commande couplé auxdits fichiers, au moyen d'entrée et aux moyens d'édition et comportant des moyens de pré-traitement des expéditions, assurant une saisie des données et une vérification des données saisies à partir des fichiers des transporteurs et des expéditeurs, des moyens de traitement des expéditions, affectant à chaque expédition une référence individuelle définissant avec les données saisies et vérifiées des caractéristiques de l'expédition concernée dite alors traitée et mémorisant les caractéristiques de chaque expédition traitée en une fiche d'expédition dans le fichier des expéditions, et des moyen de commande d'éditions de documents permettant la génération de documents identifiés dans le fichier des transporteurs à partir de la fiche d'expédition du fichier des expéditions, pour l'expédition concernée.

Le système comprend une balance couplée audit ensemble programmé.

Les moyens d'édition comportent une machine à affranchir et des imprimantes pour les documents autres que des vignettes d'affranchissement.

Les premières mémoires constituent en outre un fichier des pays destinataires contenant des caractéristiques propres auxdits pays et relatives à leur identification d'une part en regard des tarifs, et d'autre part en regard des documents spécifiques à des services pour ces pays.

Un tel système est une association ou groupement de transporteurs à laquelle s'adressent des usagers, pour l'expédition ou la réception des paquets.

Un tel système nécessite une mise à jour fréquente, en raison des modifications qui interviennent dans les paramètres utilisés et notamment: changements des tarifs postaux, modifications des documents d'accompagnements des paquets, etc..

En d'autres termes, EP-A-0 333 043 concerne un système de traitement qui comprend une unité de commande qui peut être constituée d'un ordinateur personnel muni d'un lecteur de disquette. Une partie du logiciel du système, et en particulier le fichier des tarifs postaux et le fichier définissant les documents d'accompagnement des colis, est chargé dans les mémoires du système, au moyen d'une disquette vendue par le fabricant lorsqu'une mise à jour est nécessaire.

Cette mise à jour, effectuée par le constructeur du système, est une opération qui nécessite un investissement, en raison de la nécessité d'une surveillance constante des règlements et tarifications en vigueur, de leur interprétation et de leur concrétisation sous la forme d'une disquette de mise à jour qui sera utilisée dans le système. Un premier but de l'invention est d'empêcher qu'un utilisateur du système, ayant plusieurs systèmes en service, ne soit tenté de n'acquérir qu'une seule disquette de mise à jour, et reproduire cette disquette pour l'utilisation sur ses autres systèmes.

EP-A-0 207 492 décrit un système pour transmettre des informations d'un centre de rattachement à une machine à affranchir, par l'intermédiaire d'une carte à puce, incorporant une mémoire et un microprocesseur. Le centre de rattachement et la machine à affranchir sont équipés chacun d'un terminal de lecture-écriture pour ce type de carte. Une carte est affectée à chaque machine, au moyen d'une clé d'accès et d'un numéro d'identification de machine, qui sont mémorisés dans la carte. Un terminal ne peut lire ou écrire dans la carte que s'il a d'abord fourni la bonne clé et le bon numéro de machine. Un microprocesseur contenu dans cette carte peut invalider l'accès à la carte après un nombre prédéterminé d'accès non réussi et le processeur de la machine d'affranchissement peut bloquer celle-ci s'il ne reconnaît pas le numéro de machine fourni par la carte.

WO-A-8 801 818 montre une machine d'expédition postale comportant une mémoire contenant les tarifs de transporteurs et une mémoire contenant un programme pour remplir un formulaire correspondant à un service de courrier particulier et un ensemble de commande programmable comportant un microprocesseur qui peut arrêter toute transaction en cas de détection d'une carte électronique (user card) non valide ou munie d'un code personnel non valide.

Un autre but de l'invention est de réaliser un système pouvant utiliser n'importe quel ensemble programmé de commande (par exemple un PC du commerce) avec n'importe quelle machine à affranchir.

L'invention a pour objet un système de traitement des expéditions de paquets selon la revendication 1.

Selon un mode de réalisation particulier, ladite carte est reliée d'une part par un bus à la machine à affranchir et à la balance, et d'autre part, par un bus à l'ensemble programmé de commande.

Selon un mode de réalisation particulier, ladite carte comprend un micro-contrôleur associé à une mémoire morte contenant un programme d'initialisation, une mémoire vive contenant un programme d'application et un composant spécifique contenant les listes des documents à imprimer et des calculs de tarifs autorisés qui constituent la configuration du système.

Selon un mode de réalisation particulier, le programme d'application de la carte est effacé lorsque l'échange de données avec le programme du système excède une durée prédéterminée.

L'invention sera bien comprise par la description donnée ci-après d'un mode de réalisation de l'invention en référence au dessin ci-annexé dans lequel:
- la figure 1 est un schéma synoptique du système de traitement des expéditions selon l'invention
- la figure 2 est un schéma synoptique montrant la configuration de la carte système paquet équipant le système de l'invention.

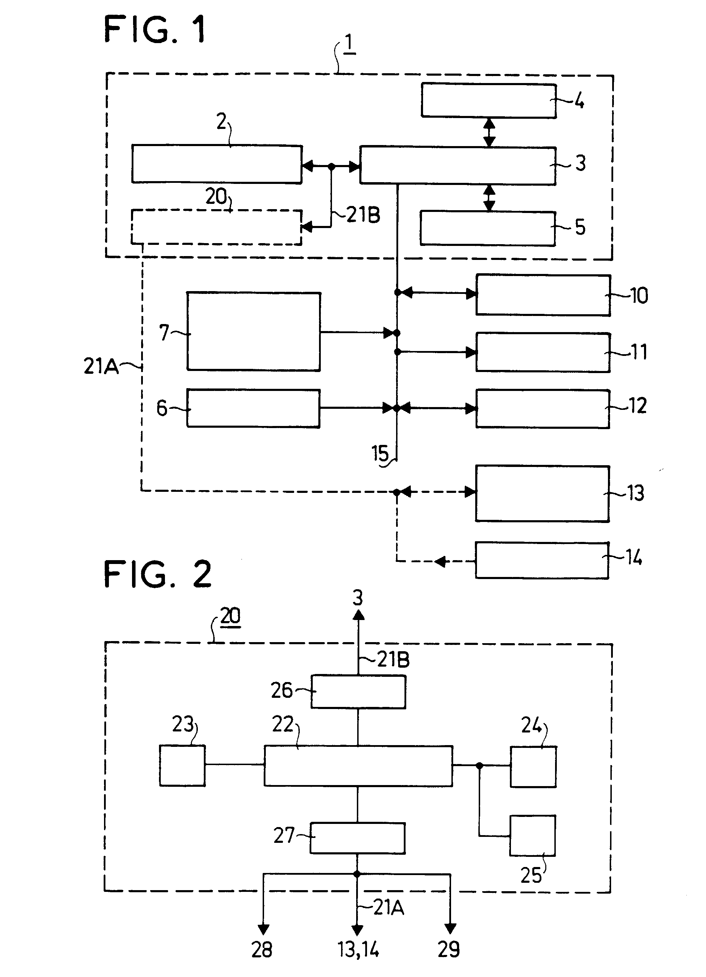

Dans la figure 1, on a représenté en traits pleins les éléments du système qui ont été décrits dans le brevet ci-dessus mentionné EP-A-0 333 043, et en traits tiretés, les éléments supplémentaires apportés selon la présente invention.

Dans la figure 1, la référence 1 désigne une unité centrale de traitement comportant un ensemble de mémoires 2 dites fichiers, un ensemble programmé de commande 3, une mémoire de fonctions spécifiques de commande 4 et une horloge calendrier 5. L'ensemble de mémoires 2, la mémoire 4 et l'horloge calendrier sont couplés à l'ensemble programmé 3 par des bus internes.

Le système comprend en outre un clavier 6 et un écran 7 couplés à l'unité centrale de traitement 1, pour le dialogue avec un opérateur, des moyens de génération de documents tels que des imprimantes, ici au nombre de trois portant les références 10, 11 et 12, et affectées à l'édition de documents spécifiques. Les imprimantes sont reliées au clavier et à l'écran, ainsi qu'à l'unité centrale de traitement, par des bus reliés chacun à un bus commun d'accès 15.

Le système est complété par une machine à affranchir 13 et une balance 14.

Tous les éléments précités ont été décrit dans le brevet précité auquel le lecteur pourra se reporter pour plus de détails.

Selon la présente invention, le système comprend une carte dite carte système paquet, 20, insérée de préférence dans l'unité centrale de traitement.

Un premier rôle de la carte 20 est d'assurer la maîtrise de la liaison avec la machine à affranchir et avec la balance 14; pour cela, la carte 20 est reliée directement, par un bus 21A, à la machine à affranchir 13 et à la balance 14.

Un autre rôle de la carte 20 est d'assurer le contrôle et le verrouillage du système, en intervenant dans les échanges entre l'ensemble programmé de commande 3 et l'ensemble de mémoires 2; à cet effet, la carte 20 est reliée par un bus 21B à l'ensemble programmé de commande 3.

La structure et le fonctionnement de la carte 20 apparaîtront à la lumière des explications données en référence à la figure 2, qui représente le schéma d'organisation de la carte.

La carte 20 s'articule autour d'un micro-contrôleur 22 associé à une mémoire morte 23 et à une mémoire vive 24.

La mémoire morte 23 contient un programme d'initialisation qui permet au logiciel du micro-contrôleur 22 d'être chargé avec le programme d'application contenu en mémoire vive 24.

Le programme d'application de la carte est chargé au lancement des programmes du système utilisant la carte; le déroulement du programme d'application est arrêté à la sortie de ces programmes.

Le programme d'application de la carte est effacé:
- sur ordre du logiciel du système,
- lors d'une coupure du secteur ou du retrait de la carte de l'unité centrale,
- lorsque l'échange des données avec le programme du système ne respecte pas une durée prédéterminée.

La carte 20 est complétée par un composant spécifique 25, relié au micro-contrôleur, et qui contient dans des mémoires les listes des documents à imprimer et des calculs de tarifs autorisés, qui constituent la configuration du système. Ces listes sont déterminées lors de la configuration du système et inscrites dans les mémoires de la carte.

Le composant spécifique 25 contient en outre:
- un numéro de système N1, propre au système,
- un numéro secret N₂ , propre à la carte,
- une table de cryptage T1, commune à tous les systèmes,
- une table de cryptage T2, propre à la carte.

Les disquettes de mise à jour ou de changement de tarifs que reçoit l'utilisateur du système ont leurs données cryptées par le couple N1,T1. Ces données, une fois transférées dans le système, ne sont exploitables par le programme de celui-ci que si elles sont cryptées par le couple N2,T2.

La présence, dans l'unité centrale de traitement du système, de la carte 20, évite tout risque de fraude de la part de l'utilisateur du système, puisque les disquettes de mise à jour ne pourront être utilisées que sur son système.

Par ailleurs, toute tentative de bénéficier de services ou de tarifs auxquels l'utilisateur n'a pas droit sera vouée à l'échec puisque le composant spécifique contient des listes limitatives des documents correspondants et des tarifs.

Enfin, toute tentative de déchiffrage des codes ou cryptages utilisés sera déjouée, car ces tentatives nécessiteront une durée dépassant la durée normale d'utilisation du système, ce qui entraînera l'effacement du programme d'application de la carte.

La carte contient des interfaces 26 et 27 pour les liaisons respectivement avec l'ensemble programmé de commande 3 et la machine à affranchir 13 et la balance 14.

La carte peut comporter des sorties supplémentaires telles que 28 et 29, pour la connexion de périphériques supplémentaires.

## Revendications

1. Système de traitement des expéditions de paquets permettant, à partir des données définissant pour chaque expédition un destinataire et un transporteur avec un service de transporteur à utiliser, l'acheminement des expéditions reçues de différents expéditeurs vers leurs destinataires respectifs par différents transporteurs, comportant :
- des premières mémoires qui constituent, d'une part un fichier des transporteurs contenant des caractéristiques propres aux transporteurs utilisables dans le système et relatives à l'identification individuelle des transporteurs eux-mêmes et à l'identification, pour chacun d'eux, de services possibles et de types de documents devant pour chaque service accompagner chaque expédition, et, d'autre part, un fichier des expéditeurs contenant des caractéristiques propres aux utilisateurs utilisant le système et relatives à l'identification individuelle des expéditeurs eux-mêmes et pour chacun d'eux à l'identification de chaque transporteur qu'il peut utiliser avec chaque service de ce transporteur auquel il a droit, les premières mémoires constituant en outre un fichier des pays destinataires contenant des caractéristiques propres auxdits pays et relatives à leur identification d'une part en regard des tarifs, et d'autre part en regard des documents spécifiques à des services pour ces pays,
- une deuxième mémoire qui constitue un fichier des expéditions,
- un moyen d'entrée des données relatives à chaque expédition,
- des moyens d'édition des documents,
- un ensemble programmé de commande couplé auxdits fichiers, au moyen d'entrée et aux moyens d'édition et comportant des moyens de pré-traitement des expéditions, assurant une saisie des données et une vérification des données saisies à partir des fichiers des transporteurs et des expéditeurs, des moyens de traitement des expéditions, affectant à chaque expédition une référence individuelle définissant avec les données saisies et vérifiées des caractéristiques de l'expédition concernée dite alors traitée et mémorisant les caractéristiques de chaque expédition traitée en une fiche d'expédition dans le fichier des expéditions, et des moyens de commande d'édition de documents permettant la génération de documents identifiés dans le fichier des transporteurs à partir de la fiche d'expédition du fichier des expéditions, pour l'expédition concernée, ledit système comprenant une balance couplée audit ensemble programmé, lesdits moyens d'édition comportant une machine à affranchir et des imprimantes pour les documents autres que des vignettes d'affranchissement,
le système étant caractérisé en ce qu'il comprend une carte électronique (20) s'insérant dans l'unité de traitement (1), assurant la maîtrise de la liaison avec ladite machine à affranchir (13) et avec ladite balance (14), et qui contient un numéro de système (N1), un numéro secret (N2), une table de cryptage (T1) commune à tous les systèmes et une table de cryptage (T2) propre à la carte électronique, de telle sorte que les disquettes de mises à jour reçues par l'utilisateur ayant leurs données cryptées par le couple (N1, T1) ne peuvent être exploitables dans le programme du système que cryptées par le couple (N2, T2), ce qui assure un contrôle et un verrouillage du logiciel du système en intervenant dans les échanges entre l'ensemble programmé de commande (3) et l'ensemble des mémoires (2).

2. Système selon la revendication 1, caractérisé en ce que ladite carte (20) est reliée d'une part par un bus (21A) à la machine à affranchir (13) et à la balance (14), et d'autre part, par un bus (21B) à l'ensemble programmé de commande.

3. Système selon la revendication 2, caractérisé en ce que ladite carte (20) comprend un micro-contrôleur (22), associé à une mémoire morte contenant un programme d'initialisation, une mémoire vive (24) contenant un programme d'application et un composant spécifique (25) contenant les listes des documents à imprimer et des calculs de tarifs autorisés qui constituent la configuration du système.

4. Système selon l'une des revendications 1 à 3, caractérisé en ce que le programme d'application de la carte est effacé lorsque l'échange de données avec le programme du système excède une durée prédéterminée.

## Patentansprüche

1. System zur Bearbeitung der Abfertigung von Paketen, das ausgehend von Daten, die für jede Sendung einen Empfänger und einen Transportdienst zusammen mit einer bestimmten zu verwendenden Dienstleistung definieren, die von verschiedenen Absendern erhaltene Sendungen über verschiedene Transportdienste zu den jeweiligen Empfängern zu befördern erlaubt,
- mit ersten Speichern, die einerseits eine Kartei der Transportdienste mit Angaben über die in dem System einsetzbaren Transportdienste, die sich auf die individuelle Identifizierung der Transportdienste selbst sowie die Identifizierung der möglichen Dienstleistungen jedes Transportdiensts und der Dokumente beziehen, die für jede Dienstleistung jede Sendung begleiten müssen, und andererseits eine Absenderkartei mit Kenndaten bezüglich der das System benutzenden Absender bilden, diesich auf die individuelle Identifizierung der Absender selbst und für jeden von ihnen auf die Identifizierung jedes Transportdiensts beziehen, den er mit jeder Dienstleistung dieses Transportdiensts verwenden kann, die er in Anspruch nehmen kann, wobei die ersten Speicher außerdem eine Kartei der Ziel länder mit Kenndaten der Länder bilden, die sich auf die Identifizierung einerseits hinsichtlich ihrer Tarife und andrerseits hinsichtlich der für die Paketdienste dieser Länder spezifischen Dokumente beziehen,
- mit einem zweiten Speicher, der eine Sendungskartei bildet,
- mit einem Eingangsmittel für die jeder Sendung zugeordneten Daten,
- mit Dokumentenausgabemitteln,
- mit einer programmierten Steuereinheit, die mit den Karteien, mit den Eingangsmitteln und mit den Ausgabemitteln gekoppelt ist und Mittel zur Vorbearbeitung der Sendungen aufweist, die eine Datenerfassung und eine Überprüfung der erfaßten Daten ausgehend von Karteien der Transportdienste und Absender gewährleisten, wobei Mittel zur Bearbeitung der Sendungen jeder Sendung eine individuelle Referenz zuteilen, die mit den erfaßten und überprüften Daten Kennwerte der betreffenden Sendung definieren, die dann als bearbeitet bezeichnet wird, und die Kennwerte jeder bearbeiteten Sendung in eine Sendungskarte der Sendungskartei einspeichern, wobei weiter Mittel zur Steuerung der Ausgabe von Dokumenten vorgesehen sind, die die Erzeugung von in der Kartei der Transportdienste ausgehend von der Sendungskarte der Sendungskartei identifizierten Dokumenten für die betreffende Sendung ermöglichen, wobei das System auch eine Waage aufweist, die an die programmierte Steuereinheit gekoppelt ist, und die Dokumentenausgabemittel eine Frankiermaschine und Drucker für die Dokumente außer dem Postwertzeichen enthalten, dadurch gekennzeichnet, daß das System eine Elektronikkarte (20) aufweist, die in die Bearbeitungseinheit (1) eingefügt ist und die Verbindung mit der Frankiermaschine (13) und der Waage (14) überwacht sowie eine Systemnummer (N1), eine Geheimnummer (N2), eine allen Systemen gemeinsame Chiffriertabelle (T1) und eine der Elektronikkarte eigene Chiffriertabelle (T2) enthält, sodaß die Aktualisierungsdisketten, die der Benutzer empfangen hat und deren Daten durch das Paar (N1-T1) verschlüsselt sind, in dem Programm des Systems nur durch das Paar (N2-T2) verschlüsselt verwertbar sein können, sodaß eine Überwachung und Blockierung der Software des Systems gewährleistet wird, indem auf den Datenaustausch zwischen der programmierten Steuereinheit (3) und der Gruppe von Speichern (2) eingewirkt wird.

2. System nach Anspruch 1, dadurch gekennzeichnet, daß diese Karte (20) einerseits über einen Bus (21A) an die Frankiermaschine (13) und die Waage (14) und andrerseits über einen Bus (21B) an die programmierte Steuereinheit gekoppelt ist.

3. System nach Anspruch 2, dadurch gekennzeichnet, daß die Karte (20) ein Mikro-Kontrollorgan (22) in Verbindung mit einem ein Initialisierungsprogramm enthaltenden Festwertspeicher (23), einen ein Anwendungsprogramm enthaltenden Arbeitsspeicher (24) und ein spezifisches Bauelement (25) aufweist, das die Listen der zu druckenden Dokumente und der zulässigen Tarifberechnungen enthält, die die Konfiguration des Systems bilden.

4. System nach einem der Ansprüche 1 bis 3, dadurch gekennzeichnet, daß das Anwendungsprogramm der Karte gelöscht wird, wenn der Datenaustausch mit dem Programm des Systems eine vorgegebene Zeitdauer überschreitet.

## Claims

1. A system for processing parcel shipping enabling shipments received from various shippers to be conveyed to their respective recipients via various carriers on the basis of data defining a recipient and a carrier for each shipment, together with a specific one of that carrier's services which is to be used, the system comprising:
first memories constituting. firstly a carrier file containing characteristics specific to the carriers usable by the system and relating to individual identification of the carriers themselves and to identification of the various services offered by each of them, together with the types of documents required for accompanying each shipment for each service, and secondly a sender file containing characteristics specific to the senders using the system and relating to individual identification of the senders themselves, and to identification of the carriers that each of the senders may use and the services of said carriers to which they have access, the first memories also including a destination country file containing characteristics specific to said countries and relating to their identification both with respect to tariff and with respect to the documents specific to services for said countries:
a second memory constituting a shipment file:
input means for inputting data relating to each shipment;
print means for outputting documents; and
a programmed control unit coupled to said files, to said input means and to said print means, and including shipment preprocessing means for inputting data and for verifying the input data from the carrier and sender files, shipment processing means attributing an individual reference to each shipment which, together with the data as input and verified defines the characteristics of the corresponding shipment, referred to as a "processed" shipment, and storing the characteristics of each processed shipment in a shipment record in the shipment file, and document printing control means for generating the documents identified in the carrier file on the basis of the shipment record in the shipment file corresponding to each shipment, said system including scales coupled to said programmed unit, said print means including a postage meter and printers for printing documents other than payment stickers, the system being characterized in that it includes an electronic card (20) for insertion into the processor unit (1). which card controls the connection with said postage meter (13) and said scales (14), and contains a system number (N1), a secret number (N2), an encrypting table (T1) common to all systems, and an encrypting table (T2) specific to the electronic card, so that the updating floppy disks received by the user having data that is encrypted using the combination (N1,T1) can be used in the system program only when encrypted by the combination (N2,T2), thereby ensuring that the software of the system is monitored and locked by intervening in data interchanges between the programmed control unit (3) and the set of memories (2).

2. A system according to claim 1, characterized in that said card (20) is connected firstly via a bus (21A) to the postage meter (17) and to the scales (14), and secondly via a bus (21B) to the programmed control unit.

3. A system according to claim 2, characterized in that said card (20) includes a microcontroller (22) associated with a read only memory containing an initialization program, a read/write memory (24) containing an application program and, and a special program (25) containing lists of authorized tariff calculations and of documents to be printed, thereby constituting the configuration of the system.

4. A system according to any one of claims 1 to 3, characterized in that the application program in the card is erased when data interchange with the system program exceeds a predetermined duration.
